# EUROPÄISCHE PATENTSCHRIFT

(11) **EP 1 926 592 B1**
(45) Veröffentlichungstag und Bekanntmachung des Hinweises auf die Patenterteilung: **22.12.2010**
(21) Anmeldenummer: 06791855.7
(22) Anmeldetag: 06.09.2006
(51) Int. Cl.: B32B 27/34, A22C 13/00

(54) **BIAXIAL VERSTRECKTE SCHLAUCHFOLIE MIT DREI NEBENEINANDER LIEGENDEN SCHICHTEN AUF POLYAMIDBASIS**
BIAXIALLY DRAWN TUBULAR FILM COMPRISING THREE ADJACENT POLYAMIDE-BASED LAYERS
ENVELOPPE DE TUYAU ETIREE DE MANIERE BIAXIALE COMPRENANT TROIS COUCHES ADJACENTES A BASE DE POLYAMIDE

(30) Priorität: 09.09.2005 DE 102005043287
(43) Veröffentlichungstag der Anmeldung: 04.06.2008
(73) Patentinhaber: Kalle GmbH, 65203 Wiesbaden (DE)
(72) Erfinder: DELIUS, Ulrich, 60529 Frankfurt (DE); FERON, Bernhard, 65189 Wiesbaden (DE)
(74) Vertreter: Plate, Jürgen
(86) Internationale Anmeldenummer: PCT/EP2006/008666
(87) Internationale Veröffentlichungsnummer: WO 2007/028582

(56) Entgegenhaltungen:
- EP-A1- 0 530 538
- EP-A1- 0 603 678
- DE-A1- 4 001 612
- DE-A1- 4 339 337

## Beschreibung

Die Erfindung betrifft eine biaxial verstreckte Schlauchfolie mit mehreren Schichten auf Basis von Polyamid, ein Verfahren zu ihrer Herstellung sowie ihre Verwendung als Nahrungsmittelhülle, insbesondere als künstliche Wursthülle.

Nahtlose schlauchförmige Kunststoffhüllen werden überwiegend bei der Herstellung von Koch- und Brühwürsten verwendet. Übliche Hüllen, haben meist einen 3- bis 5-schichtigen Aufbau, wobei im allgemeinen mindestens eine dieser Schichten aus aliphatischem Polyamid und eine aus polyolefinischen Werkstoffen mit wasserdampfsperrendem Charakter besteht. Meistens sind die Hüllen biaxial verstreckt. Die Verstreckung führt bei dem im Festkörper befindlichen Polyamid (PA) zu einer Molekülorientierung und einer dehnungsinduzierten Kristallisation. Diese Effekte bewirken eine erhebliche Festigkeitssteigerung der PA-Schichten sowie ein - in der Anwendung meist erwünschtens - thermischens Schrumpfvermögen der Hüllen.

Da der biaxiale Streckprozeß bei Schlauchfolien stets mit Hilfe freistehender Reckblasen erfolgt, die mit Gas- oder Fluidpolster gefüllt sind (sog. Double-Bubble-Prozeß), kann das Verfahren nicht mechanisch (von außen) kontrolliert werden. Prinzipiell besteht immer das Risiko von Schwankungen des Blasendurchmessers (sog. Pulsierungen) bis hin zum sporadischen Überdehnen und Platzen der Reckblase. Da unter den üblicherweise verwendeten Polymertypen nur PA eine signifikante Orientierung beim Verstrecken erfährt, gehen von diesem auch hauptsächlich die Kräfte zur Stabilisierung der Reckblase aus (progressive Rückstellkräfte).

Eine optimale Blasenstabilität ist nur bei Verwendung von mäßig schnell kristallisierenden, aliphatischen PA-Typen zu erreichen. Als besonders geeignet haben sich PA 6, PA 6/66 sowie Gemische aus diesen erwiesen. Beimischungen weiterer Stoffe (z.B. andere PA-Typen, sonstige Polymere, Pigmente und andere technisch erwünschte Additive) sind möglich, führen tendenziell aber immer zur Destabilisierung der Reckblase.

Oftmals werden an eine Nahrungsmittelhülle Anforderungen gestellt, die sich mit Hüllenstrukturen, deren "tragender" Bestandteil eine Schicht aus PA6 (oder aus einem Gemisch von PA6 und PA6/66) ist, nicht gemeinsam erfüllen lassen.

Die marktüblichen mehrschichtigen Hüllen enthalten eine außenliegende Hauptschicht aus PA6 und/oder PA6/66, gefolgt von dünneren Schichten, die bei der Verstreckung keine signifikante Orientierung ausbilden. Das sind beispielsweise Polyethylenschichten. Die innere Oberfläche wird oft von einer weiteren, relativ dünnen PA-Schicht gebildet. Die Dicke der Außenschicht macht meist 50 bis 70 % der gesamten Foliendicke aus und ist damit bestimmend für die Stabilität der Reckblase wie auch für die mechanische Festigkeit der Hülle.

Derartige Hüllenstrukturen werden anwendungstechnisch jedoch oft nicht als optimal empfunden. Der Einsatz als Wursthülle verlangt einerseits eine hohe lineare Festigkeit der Folie und bei Verdehnung eine möglichst gute elastische Rückverformung, d.h. einen geringen Verdehnungsrest. Dies läßt sich am besten durch Einbau einer möglichst dicken Schicht aus PA6 in die Struktur erreichen. Andererseits ist eine möglichst weich-zähe Mechanik der Struktur gefragt, damit die Hülle während der Konfektionierung und während des Füllens den mechanischen Knickbelastungen standhält, wie sie auf schnellaufenden modernen Anlagen gegeben sind. Hierfür wären Strukturen mit niedrigkristallinen aliphatischen Copolyamiden wie PA6/66 wesentlich besser geeignet. Jedoch reichen die aliphatischen Copolyamide - im verstreckten Zustand - hinsichtlich Festigkeit und elastischer Rückverformung - nicht an PA6 heran.

An der Oberfläche liegende Schichten aus aliphatischen Copolyamiden haben einen weiteren Nachteil: Aufgrund der geringen Kristallinität der Polymere neigen aufeinander liegende Oberflächen stark dazu, untereinander zu verkleben. Verklebungen können bei unter normaler Spannung aufgewickelten Rollen auftreten, da die Hüllen während der Lagerung einen leichten Längsschrumpf ausbilden. Unter extremen Lagerbedingungen, d.h. wenn die Hüllen bei erhöhter Temperatur und hoher Feuchte gelagert werden, erhöht sich die Adhäsionsneigung der Copolyamide weiter, so daß das Risiko von Verklebungen steigt. Demgemäß wäre es vorteilhaft, Copolyamid in einer im inneren liegenden Schicht zu verwenden bzw, dieses durch eine weitere Schicht, beispielsweise aus PA6, abzudecken.

In der DE 40 01 612 A1 ist eine biaxial verstreckte, schlauchförmige Nahrungsmittelhülle auf Basis von Polyamid offenbart, die weinigstens 3 Schichten umfaßt. Die äußere und die innere Schicht umfassen ein aliphatisches Polyamid und/oder Copolyamid, während die mittlere Schicht ein teilaromatisches (Co)Polyamid umfaßt und als Barriereschicht für Sauerstoff und Wasserdampf wirkt. In der äußeren Schicht der Hülle gemäß D1 können zusätzlich noch weitere Polymere, wie Polyolefine, Ionomere oder Polyester enthalten sein. Ionomere sind dabei definiert als "Polyolefine mit Carboxylresten". Die mittlere Schicht, d.h. die Barriereschicht, besteht im wesentlichen aus teilaromatischem (Co)Polyamid. Sie kann daneben gesättigte, lineare, aliphatische (Co)Polyamide enthalten.

Gegenstand von DE 43 39 337 A1 ist eine 5-schichtige, biaxial verstreckte Schlauchfolie, die eine hohe Wasserdampf- und Sauerstoff-Barriere aufweist und zur Verpackung von pastösen Lebensmitteln vorgesehen ist. Die 1, und die 5. Schicht bestehen aus aliphatischen (Co)Polyamiden und/oder teilaromatischen (Co)Polyamiden. Die 3. Schicht ist eine Polyethylenschicht, beispielsweise eine Schicht aus LLDPE, und wirkt als Wasserdampfbarriere. Die 2. und 4. Schicht sind jeweils dünne Haflverrnittlerschlchten, vorzugsweise aus modifizierten Polyolefinen. Die Hülle weist dementsprechend nur zwei (Co)Polyamid-Schichten auf, die zudem voneinander getrennt sind.

Die biaxial verstreckte, nahtlose Wursthülle gemäß EP 0 603 678 enthält zwei Polyamidschichten, die auf der Innen- bzw. der Außenseite der Hülle liegen. Darüber hinaus enthält sie mindestens eine weitere Schicht aus überwiegen aliphatischem Polyamid, das durch Zugabe von anorganischen und/oder organischen Zusätzen modifiziert ist. Die modifizierte Polyamidschicht ist mit einer der innen- bzw, außen liegenden Polyamidschichten direkt verbunden. Die Wursthülle umfaßt darüber hinaus eine zwischen Polyamidschichten liegende Schicht mit wasserdampf-sperrender Funktion. Die Aufgabe bestand darin, technisch notwendige Mischungszusätze in die Hüllenstruktur zu inkorporieren und dabei die bekannten produktionstechnischen Sichwierigkeiten und qualitativen Nachteile, welche bei additivhaltigen PA-Schichten auftreten können, zu vermeiden. Eine Beeinflussung der Relationen zwischen linearer Festigkeit und Zähigkeit o.ä. ist aus der Schrift nicht zu entnehmen.

Ein weiterer anwendungstechnischer Nachteil der üblichen Mehrschichthüllen ist deren eingeschränkte Bedruckbarkeit. Lebensmittelhüllen gelangen heute häufig in bedruckter Form zum Einsatz, wobei die Bedruckung meist mit physiologisch und ökologisch vorteilhaften, wäßrigen Dispersionsfarben erfolgen soll. Die physikalische Haftung solcher Farbsysteme auf PA reicht oft nicht für die Praxis aus; insbesondere beim Einsatz als Wursthülle, wo starke mechanische und klimatische Wechselbeanspruchungen auftreten, kann es zum Abblättern von Farbschichten kommen. Eine chemische Verankerung ist bei den meisten Dispersionsfarbsystemen - insbesondere bei 2-Komponenten-Systemen - prinzipiell möglich, setzt jedoch die Anwesenheit von genügend reaktionsfähigen chemischen Gruppen in der Folienoberfläche voraus.

Eine Oberfläche aus reinem PA enthält nur sehr wenige reaktive Gruppen (Endgruppen der PA-Kettenmoleküle). Es wäre daherwünschenwert, zusätzliche reaktive Gruppen in die PA-Matrix einzuführen, z.B. durch Einblenden eines COOH-funktionellen weiteren Polymers.

Einschichtige Wursthüllen aus Gemischen mit PA und anteilig einem säuremodifizierten Polyolefin sind bereits aus der EP-B 550 833 bekannt. Als erfindungsgemäßes Beispiel wird dort eine Hülle aus 79,6 Gew.-% PA 6, 10 Gew.-% PA6-I/6-T, 10 Gew.-% eines Ethylen/Methyacrylsäure-Copolymers und 0,4 Gew. -% Glimmer (Mica) angeführt. Fremdpolymere wie Ethylen/Methacrylsäure-Copolymere sind mit PA jedoch nicht molekular verträglich und bilden in entsprechenden Mischungen eine disperse Phase aus. Mit steigendem Mischungsanteil kann die disperse Phase den Zusammenhalt der kohärenten PA-Phase zunehmend stören, was zum Verlust des mechanischen Eigenschaftsbildes des Polyamids führen kann. Dies äußert sich insbesondere in einem drastischen Abfall der Blasenstabilität während der Verstreckung. Bei Hüllenstrukturen, die überwiegend oder ganz aus einem solchen Gemisch bestehen, muß daher der Anteil an Fremdpolymer begrenzt bleiben, d.h. es kann keine beliebig hohe Konzentration an reaktiven Gruppen verwirklicht werden. Es wäre wünschenswert, eine mit reaktiven Gruppen modifizierte und entsprechend gut bedruckbare Hüllenoberfläche mit den besseren prozeßtechnischen und mechanischen Eigenschaften von reinem PA kombinieren zu können.

Aufgabe der Erfindung war es, eine Nahrungsmittelhülle bereitzustellen, in welcher mehrere Eigenschaften in vorteilhafter Weise kombiniert sind:
a) hohe lineare Festigkeit (gemäß Stand der Technik)
b) hohe Zähigkeit der Folienstruktur
c) keine Verklebungsneigung der Foliertoberflächen miteinander
d) Möglichkeit der reaktiven Verankerung von 2K-Dispersions-Druckfarben auf der außeren Oberfläche (d.h. Außenschicht mit hoher Konzentration z.B. an COOH-Gruppen)
e) Stabilität des Herstellprozesses gemäß Stand der Technik (hohe Eigenstabilität der Reckblase)

Die Aufgabe wurde gelöst mit einer mehrschichtigen Schlauchfolie, bei der die äußere Schicht und die beiden unmittelbar darauf folgenden Schichten solche auf Basis von Polyamid mit jeweils unterschiedlicher Zusammensetzung sind.

Gegenstand der vorliegenden Erfindung ist demgemäß eine biaxial verstreckte Schlauchfolie mit mehreren Schichten auf Basis von Polyamid, die dadurch gekennzeichnet ist, daß sie mindestens 5 Schichten aufweist, von denen die äußere Schicht und die beiden darauf folgenden Schichten zu 50 Gew.-% oder mehraus mindestens einem aliphatischen (Co-)Polyamid bestehen, dabei jedoch unterschiedlich zusammengesetzt sind, wobei die Schicht, die ihre Außenseite bildet, mindestens 60 Gew.-% Polyamid 6 und mindestens 8 Gew.-% eines thermoplastischen Copolymers mit Carboxylgruppen enthält, und die 2, Schicht von außen eine Mischung aus mindestens 25 Gew.-% Polyamid 6 und mindestens 25 Gew.-% Polyamid 6/66 umfaßt und die 3. Schicht von außen zu 50 Gew.-% oder mehr aus Polyamid 6 besteht.

Die Schlauchfolie ist bevorzugt nahtlos, In einer weiteren bevorzugten Ausführungsform ist sie auch thermofixiert, vorzugsweise jedoch nichtvollständig, so daß ein Restschrumpf von bis zu 20 % in Längs- und Querrichtung verbleibt (gemessen nach 15 min Lagerung in 80 °C warmem Wasser),

Die äußere Schicht und die beiden darauffolgenden Schichten sind Schichten auf Basis von aliphatischem (Co-)Polyamid und grenzen unmittelbar aneinander, es befinden sich also keine Haftschichten dazwischen. Als weitere Schichten können solche auf Basis verschiedener Werkstoffe, **z.**B. auf Basis olefinischer (Co-)Polymere und erneut von PA vorhanden sein. "(Co-)Polyamid" bedeutet im Zusammenhang mit der vorliegenden Erfindung, "Polyamid und/oder Copolyamid", entsprechendes gilt für (Co-)Polymer usw.

Die erste, d.h. die außenliegende Schicht enthält mindestens 60 Gew.-%. PA 6 und mindestens 8 Gew.-% eines thermoplastischen, Carboxylgruppen enthaltenden Copolymers, beispielsweise eines Ethylen/Methacrylsäure-Copolymers. In untergeordneten Mengen können daneben aliphatische oder teilaromatische (Co-)Polyamide, Farb- und Antiblockpigmente, Weichmacher, Gleitmittel und sonstige übliche Additive enthalten sein. Die Schicht trägt zwischen 3 und 15 %, bevorzugt 5 bis 10 %, zur Gesamtdicke des Verbundes bei.

Die hierauf folgende, zweite Schicht enthält mindestens 25 Gew.-% PA 6 und mindestens 25 Gew.-% PA 6/66, bevorzugt 40 bis 70 Gew.-% PA 6 und 30 bis 60 Gew.-% PA 6/66. Weiterhin können wieder verschiedene Zusätze enthalten sein, insbesondere teilaromatische (Co-)Polyamide, Weichmacher und Farbpigmente. Der Anteil dieser Schicht an der Dicke des Gesamtverbundes beträgt 10 bis 30 %, bevorzugt 12 bis 25 %.

Die sich daran anschließende dritte Schicht besteht überwiegend aus PA 6. Es können darin bis zu 25 Gew.-% weitere Polymere enthalten sein, insbesondere aliphatische und/oder teilaromatische (Co-)Polyamide, weiterhin übliche Zusätze, wie schon oben aufgeführt. Der Dickenanteil der Schicht am Gesamtverbund beträgt 20 bis 40%, bevorzugt 25 bis 35%.

Die vierte Schicht enthält mindestens ein Polymer, welches bei Coextrusion Haftung zu Polyamid auszubilden vermag, z.B. ein mit dem Anhydrid einer α,β-ungesättigten Carbonsäure gepropftes Olefin-(Co-)Polymer. Als weitere Bestandteile können olefinische Homo-, Co- oder Terpolymere und/oder heterofunktionelle Copolymere enthalten sein (z.B. Ethylen/Acrylsäureester-Copolymere oder Ethylen/Vinylacetat-Copolymere).

Weitere sich anschließende Schichten können unterschiedlich zusammengesetzt sein, sie enthalten bevorzugt aber eines oder mehrere der vorgenannten Polymertypen. Die abschließende, die innere Oberfläche bildende Schicht basiert vorzugsweise wieder auf aliphatischem (Co-)Polyamid. Besonders bevorzugt enthält sie 50 Gew.-% oder mehr an PA 6, gegebenenfalls 2 bis 20 Gew.-% eines teilaromatischen (Co-)Polyamids sowie gegebenenfalls mindestens ein Antiblockpigment.

Bevorzugte Ausführungsformen besitzen Schichtstrukturen (Abfolge von der Außenseite zur Innenseite der Hülle; das Zeichen "//" markiert den Übergang zwischen zwei Schichten) wie in den nachfolgenden Tabellen angegeben:

| **A (5 Schichten)** | | | | | | | | | | | | | | | | |
|---|---|---|---|---|---|---|---|---|---|---|---|---|---|---|---|---|
| | 1 | | | | 2 | | | | 3 | | | | 4 | | | 5 |
| PA6 | + | FP | // | PA6 40 | + | PA6/66 | // | PA6 85 | + | PA6/66 | // | PO | + | HV | // | PA6 |
| | | 8 | | 40 | | 30 | | 85 | | 5 | | 40 | | 30 | | |
| | | -20% | | -70% | | -60% | | -95% | | -15% | | -70% | | -60% | | |

| **B (5 Schichten)** | | | | | | | | | | | | | | | | |
|---|---|---|---|---|---|---|---|---|---|---|---|---|---|---|---|---|
| | 1 | | | | 2 | | | | 3 | | | | 4 | | | 5 |
| PA6 | + | FP | // | PA6 | + | PA6/66 | // | PA6 | + | teilar. PA | // | PO 40 | + | HV 30 | // | PA6 |
| | | 8 | | 40 | | 30 | | 85 | | 10 | | 40 | | 30 | | |
| | | -20% | | -70% | | -60% | | -95% | | -40% | | -70% | | -60% | | |

| **C (7 Schichten)** | | | | | | | | | | | | | | | | | | |
|---|---|---|---|---|---|---|---|---|---|---|---|---|---|---|---|---|---|---|
| | 1 | | | | 2 | | | | 3 | | | 4 | | 5 | | 6 | | 7 |
| PA6 | + | FP | // | PA6 | + | PA6/66 | // | PA6 | + | PA6/66 | // | HV | // | PO | // | HV | // | PA6 |
| | | 8 | | 40 | | 30 | | 85 | | 5 | | | | | | | | |
| | | -20% | | -70% | | -60% | | -95% | | -15% | | | | | | | | |

| **D (7 Schichten)** | | | | | | | | | | | | | | | | | | |
|---|---|---|---|---|---|---|---|---|---|---|---|---|---|---|---|---|---|---|
| | 1 | | | | 2 | | | | 3 | | | 4 | | 5 | | 6 | | 7 |
| PA6 | + | FP | // | PA6 | + | PA6/66 | // | PA6 | + | PA6/66 | // | HV | // | EVOH | // | HV | // | PA6 |
| | | 8 | | 40 | | 30 | | 85 | | 5 | | | | | | | | |
| | | -20% | | -70% | | -60% | | -95% | | -15% | | | | | | | | |

Die obenstehenden Prozentangaben sind Gewichtsprozente, bezogen auf die jeweilige Einzelschicht. Die Abkürzungen repräsentieren die Hauptkomponente(n) der jeweiligen Schichten und haben folgende Bedeutungen:

| | |
|---|---|
| PA6: | Polyamid 6 (Polycaprolactam), |
| FP: | thermoplastisches, Carboxylgruppen-haltiges Copolymer (z.B. ein Ethylen/Methycrylsäure-Copolymer = EMAA-Copolymer), |
| PA6/66: | Copolymer aus ε-Caprolactam, Adipinsäure und 1,6-Diamino-hexan, |
| PO: | olefinisches (Co-)Polymer, z.B. Polyethylen (HDPE oder LDPE), Ethylenla-Olefin-Copolymere, Polypropylen, Ethylen/Propylen-Copolymere, Terpolymere aus verschiedenen Olefinen. Anteilig können auch heterofunktionelle Olefin-Copolymere enthalten sein, beispielsweise Copolymere aus Ethylen und Vinylacetat, Ethylen und (Meth)acrylsäure, die entsprechenden Na- bzw. Zn-lonen enthaltenden Ionomere, Copolymere aus Ethylen und Alkylestern der (Meth)acrylsäure sowie entsprechend funktionalisierte Terpolymere, |
| HV: | olefinhaltiges Polymer, das mit funktionellen Gruppen modifiziert ist und dadurch eine Haftung zu angrenzenden Schichten aus Polyamid oder EVOH ausbilden kann. Beispiele: Polyethylen (bzw. Ethylen/α-Olefin-Copolymer) gepfropft mit Anhyrid einer α,β-ungesättigten Dicarbonsäure (speziell Maleinsäureanhydrid), Ethylen/ Vinylacetat-Copolymere, Ethylen/(Meth)acrylsäure-Copolymere und deren Na- oder Zn-Salze, Ethylen/(Meth)acrylsäureester-Copolymere sowie entsprechende Terpolymere, |
| EVOH: | Ethylen/Vinylalkohol-Copolymer. Dieses enthält bevorzugt 29 bis 47 mol-% Ethylen-Einheiten, 71 bis 53 mol-% Vinylalkohol-Einheiten und 0 bis 5 mol-% Vinylacetat-Einheiten. |

Jeder der oben dargestellten Schichten, insbesondere diejenigen, in denen Polyamide und Polyolefine enthalten sind, können organische und/oder anorganische Stoffe beigemischt sein. Das sind beispielsweise weitere Polymere, Weichmacher. Gleitmittel, Stabilisatoren, sowie Antiblock- und Mattierungspigmente, Mattierungsmittel und/oder UV-Absorber.

Der Schichtverbund weist eine Gesamtdicke im Bereich 20 bis 65 µm, bevorzugt 25 bis 50 µm, auf. Die Einzelschichten 1 bis 4 besitzen allgemein folgende Dicken:

| | |
|---|---|
| Schicht 1 | 1,5 bis 8 µm, wobei der Anteil an der Dicke der Gesamtstruktur |
| | 3 bis 15%, bevorzugt 5 bis 10%, beträgt |
| Schicht 2 | 2,5 bis 15 µm, wobei der Anteil an der Dicke der Gesamtstruktur |
| | 10 bis 30%, bevorzugt 12 bis 25%, beträgt |
| Schicht 3 | 5 bis 25 µm, wobei der Anteil an der Dicke der Gesamtstruktur |
| | 20 bis 40%, bevorzugt 25 bis 30%, beträgt |
| Schicht 4 | 2 bis 15 µm, wobei der Anteil an der Dicke der Gesamtstruktur |
| | 3 bis 40%, bevorzugt 5 bis 30%, beträgt |

Die Herstellung der erfindungsgemäßen Hülle erfolgt durch Coextrusion mit Hilfe einer Mehrschicht-Ringdüse und nachfolgende biaxiale Schlauchverstreckung nach dem Stand der Technik. Entsprechende Verfahren sind publiziert und dem Fachmann an sich geläufig.

Üblicherweise werden die für jede Schicht vorgesehenen Kunststoffe bzw. deren Abmischungen in separaten Extrudern aufgeschmolzen und plastifiziert sowie in einer beheizten Coextrusions-Ringdüse zusammengeführt. Der austretende ringförmige Schmelzefilm wird durch schnelles Abkühlen zu einem weitgehend amorphen Vorschlauch verfestigt und dieser durch anschließendes Wiedererwärmen (typischerweise auf etwa 60 bis 90°C) und mit Hilfe eines zwischen zwei Quetschwalzenpaaren eingeschlossenen Luftpolsters biaxial verstreckt. Anschließend kann eine Thermofixierung erfolgen, indem der verstreckte Schlauch durch eine weitere Heizzone, gegebenenfalls stabilisiert durch ein weiteres Luftpolster, geführt wird. Hierdurch läßt sich die thermische Schrumpfneigung auf praxistaugliche Werte verringern, die in der Regel im Bereich 5 bis 20 % in Längs- und Querrichtung liegen (gemessen bei 80°C).

Die nachfolgenden Beispiele sollen die Erfindung illustrieren, ohne sie in irgendeiner Weise zu beschränken. Prozente sind darin Gewichtsprozente, soweit nicht anders angegeben oder aus dem Zusammenhang ersichtlich.

Ausgangsmaterialien:

| | |
|---|---|
| PA6: | Polyamid 6 mit einer relativen Viskosität von 4 (gemessen in 96 %iger Schwefelsäure) (®Ultramid B40 der BASF AG) |
| PA6/66: | Polyamid 6/66 (82 : 18 Gewichtsanteile) mit einer relativen Viskosität von 4 (gemessen in 96 %iger Schwefelsäure) (®Ultramid C40 der BASF AG) |
| EMAA: | Copolymer aus 91% Ethylen und 9% Methacrylsäure mit einem Schmelzpunkt von 101 °C (gemessen per DSC) und einem Melt Flow Index (MFI) von 2,5 g/10min (gemessen unter 2,16 kg Last bei 190°C) (®Nucrel 0903 der DuPont de Nemours and Company) |
| HV: | Lineares Polyethylen niederer Dichte (LLDPE), gepfropft mit ca. 0,3 Gew.-% Maleinsäuranhydrid (MSA) und mit einem MFI von 1,6 g/10 min (gemessen unter 2,16 kg Last und bei 190°C) (®Bynel 4164 der Du Pont de Nemours and Company) |
| PE: | Polyethylen vom LDPE-Type mit einer Dichte von 0,9220 g/cm³ und mit einem MFI von 0,33 (gemessen unter 2,16 kg Last und bei 190°C) (®Escorene LD166 BW1 der ExxonMobil Chemical Corp.) |
| teilar.PA: | amorphes Copolyamid aus 1,6-Diaminohexan mit Terephthalsäure und Isophthalsäure (Verhältnis 30 : 70) und mit einer Glasübergangstemperatur von 130°C (®Selar PA3426 der Du Pont de Nemours and Company] |
| PA-Ab: | Antiblock-Masterbatch aus Polyamid 6 und Calciumcarbonat (Gewichtsverhältnis 98 : 2) (®Grilon XE 3690 der Ems-Chemie AG) |

### Zur Herstellung verwendete Maschinentechnik:

Verwendet wurden Mehrschicht-Extrusionsanlagen nach dem Stand der Technik mit Rohrkalibriersystem, nachgeschalteter Streckzone zur biaxialen Blasenreckung und abschließender Thermofixierung (sog. Double-Bubble-Anlagen).

Für Beispiel 1 sowie für die Vergleichsbeispiele V1 und V2 wurde eine Anlage mit einer 5-Schicht-Ringdüse verwendet, welche durch fünf Extruder gespeist wurde, also mit je einem Extruder für jede Schicht versehen war. Für die Beispiele 2 und 3 sowie für Vergleichsbeispiel V3 gelangte eine Anlage mit einer 7-Schicht-Ringdüse, an welcher für jede Schicht ebenfalls ein separater Extruder angeschlossen war, zum Einsatz.

### Meßgrößen zur Charakterisierung von Proben aus den Beispielen

- *5%-Dehnspannung (*σ*₅) [N*/*mm²] und Reißfestigkeit (*σ*_{R}) [N*/*mm²]*
   wurde bestimmt per Zug-Dehnungsmessung gemäß DIN 53455 an längs und quer ausgeschnittenen Probestreifen von 15 mm Breite und 50 mm Einspannlänge, die vor der Messung für 30 min in kaltes Wasser eingelegt worden waren.
- *Reißdehnung - ohne Vorbeanspruchung (*ε*_{R0}) [%]*
   wurde ebenfalls bestimmt per Zug-Dehnungsmessung gemäß DIN 53455 an längs ausgeschnittenen Probestreifen von 15 mm Breite und 50 mm Einspannlänge, die vor der Messung für 30 min in kaltes Wasser eingelegt worden waren. Je Ausführungsbeispiel wurden 5 Probe vermessen und die Werte gemittelt.
- *Reißdehnung - mit Vorbeanspruchung* (ε*_{RV}*) [%]

Die Bestimmung erfolgte über zwei Schritte:

### 1. Mechanische Wechselknick-Beanspruchung

Die Beanspruchung erfolgte mittels eines Gelbo-Testers gemäß der Norm ASTM F392-93 (1999), Abschnitte 5 bis 8, und gemäß der unter Absatz 8.1.5 aufgeführten Bedingung D. Eingesetzt wurden Folienausschnitte von 280 mm (längs zur Laufrichtung) mal 200 mm (quer zur Laufrichtung). Je Ausführungsbeispiel wurden 5 Ausschnitte so behandelt.

### 2. Messung

Aus jedem der vorbeanspruchten Folienausschnitte wurde jeweils mittig längs eine Probe in einer Größe von 90 x 15 mm geschnitten, diese 30 min in kaltes Wasser eingelegt und an dieser dann mit 50 mm Einspannlänge die Reißdehnung wie oben beschrieben gemessen. Die erhaltenen 5 Meßwerte je Ausführungsbeispiel wurden ebenfalls gemittelt.

### • Verklebungsneigung

2 Ausschnitte von ca. 100 x 100 mm des gleichen Hüllenbeispiels wurden mit den Außenseiten zueinander gewandt auf eine plane Metallplatte gelegt und mittig mit einem Gewicht von 1 kg und mit einer Aufstandsfläche von 28 cm² belastet. Diese Anordnung wurde in eine Klimakammer verbracht und dort für 8 Tage bei 38°C und bei einer relativen Feuchte von 85 % gelagert. Anschließend wurde das Gewicht entfernt und die aufeinanderliegenden Folienstücke wurden von einer Ecke aus manuell auseinandergezogen. Die Bewertung erfolgte nach Augenschein mit den Noten 1 bis 5, wobei die Noten folgende Bedeutung haben:.

| | |
|---|---|
| 1 = | Folien trennen sich selbsttätig, kein Verklebungseffekt |
| 2 = | punktuelles leichtes Haften, Trennen mit minimalem Kraftaufwand |
| 3 = | partielles Haften, deutlicher Kraftaufwand, noch keine Verletzung der Oberflächen |
| 4 = | vollflächiges Haften, erhöhter Kraftaufwand, partielle Oberflächenverletzung bzw. Delamination |
| 5 = | vollflächiges Haften, Folien nur unter Zerstörung bzw. flächiger Delamination zu trennen |

### • Druckfarbenablösung

Hierzu wurde Hüllenmaterial gemäß Beispielen zunächst praxisnah bedruckt. An bedruckten Probestücken wurden anschließend die Klimabedingungen einer Brühwurst-Herstellung simuliert ("Kochbeanspruchung") und hierauf die mechanische Haftung der Farbschichten mit Hilfe von Klebeband geprüft.

### 1. Bedruckung

Verwendet wurde eine übliche Flexo-Druckmaschine mit Korona-Vorstufe und Farbantrag über eine Rasterwalze mit einem 180er Raster, einem ungeätzten Klischee (vollflächiger Antrag) und einer Warmluftrocknung (ca. 60°C). Eine handelsübliche 2K-Dispersionsdruckfarbe im Farbton weiß wurde verwendet (®Waflex 10WD 15-2 der Druckfarbenwerke Gebr. Schmidt GmbH). Die Nachhärtung des Farbauftrags erfolgte durch 4-tägige Lagerung des bedruckten Hüllenmaterials bei Raumtemperatur.

### 2. Kochbeanspruchung

Probeausschnitte des bedruckten Materials wurden für 10min in 90°C warmes Wasser eingelegt.

### 3. Haftungsprüfung

Die eben entnommenen Folienstücke wurden mit der Druckseite nach oben auf einer glatten Unterlage fixiert, trockengewischt und mit Klebebandstücken des Typs "Scotch Magic 810" beklebt. Unmittelbar anschließend wurden die Klebebandstücke vom Ende her im Winkel von 180° schnell wieder abgezogen. Es wurde visuell geschätzt, wieviel Flächen-Prozent der unter dem Klebeband liegenden Farbe beim Abziehen auf das Klebeband übergegangen war.

### Beispiel 1 und Vergleichsbeispiele V1, V2

In der ersten oben beschriebenen Extrusionsanlage wurden über 5 Extruder 5 separate Schmelzeströme generiert und diese nach Austritt aus der Düse zu Vorschläuchen von 23 mm Durchmesser verfestigt. Die Vorschläuche wurden mit Hilfe eines zwischen zwei Quetschwalzenpaaren eingeschlossenen Luftpolsters biaxial um einen Flächenfaktor von 8,3 verstreckt. Es stellte sich in allen Fällen eine stabile Reckblase mit einer Durchmesserschwankung von maximal ± 1,5 mm ein. Über die Versuchszeit (ca. 30 min) kam es in keinem Fall zu einem Platzen oder Zerreißen der Reckblase. Der verstreckte Schlauch wurde anschließend durch eine Thermofixierzone geführt, flachgelegt und aufgewickelt. Die resultierenden Hüllen hatten ein Kaliber von 65 und einen Schrumpf (gemessen nach 15 min Einlegen in 80°C warmes Wasser) von ca. 12 % in Längsrichtung und ca. 10 % in Querrichtung. Die eingesetzten Kunststoffe bzw. Kunststoffgemische, deren Anordnung in der Hüllenstruktur und die Gesamtdicken sind aus Tabellen 1 und 2 zu entnehmen.

### Beispiele 2, 3 und Vergleichsbeispiel V3

In der zweiten oben beschriebenen Extrusionsanlage wurden über 7 Extruder 7 separate Schmelzeströme generiert und diese nach Austritt aus der Düse ebenfalls zu Vorschläuchen von 23 mm Durchmesser verfestigt. Die Vorschläuche wurden biaxial um einen Flächenfaktor von 8,3 verstreckt, wie schon oben beschrieben. Auch hier stellte sich in allen Fällen eine stabile Reckblase mit einer Durchmesserschwankung von maximal ± 1,3 mm ein. Erneut kam es nicht zu einem Platzen oder Zerreißen der Reckblase über eine Zeit von ca. 30 min. Der verstreckte Schlauch wurde anschließend thermofixiert, flachgelegt und aufgewickelt. Die resultierenden Hüllen hatten ein Kaliber von 65 und einen Schrumpf (gemessen nach 15 min Einlegen in 80°C warmes Wasser) von ca. 14 % in Längsrichtung und ca. 11 % in Querrichtung. Die eingesetzten Kunststoffe bzw. Kunststoffgemische, die Anordnung der damit hergestellten Schichten in der Hüllenstruktur und die Gesamtdicken sind wieder aus Tabellen 1 und 2 zu entnehmen.

**Tabelle 1: Schichtaufbau in den Beispielen 1 bis 3**

| Beispiel Nr. | Schicht (1 = außen) | Zusammensetzung [Gew.-%] | Schichtdicke | | |
|---|---|---|---|---|---|
| | | | einzeln | | gesamt |
| | | | µm | % | µm |
| 1 | 1 | PA6 [80] + EMAA [15] + PA-Ab [5] | 3 | 6,7 | 45 |
| | 2 | PA6 [50] + PA6/66 [50] | 7 | 15,5 | |
| Ausführungsform A | 3 | PA6 [90] + PA6/66 [10] | 14 | 31,1 | |
| | 4 | PE [50] + HV [50] | 14 | 31,1 | |
| | 5 | PA6 [85] + teilar. PA[10] + PA-Ab [5] | 7 | 15,6 | |
| | | | | | |
| 2 | 1 | PA6 [80] + EMAA [15] + PA-Ab [5] | 3 | 6,3 | 48 |
| | 2 | PA6 [50] + PA6/66 [50] | 7 | 14.6 | |
| | 3 | PA6 [90] + PA6/66 [10] | 13 | 27,1 | |
| Ausführungsform C | 4 | HV [100] | 3 | 6,2 | |
| | 5 | PE [100] | 14 | 29,2 | |
| | 6 | HV [100] | 3 | 6,2 | |
| | 7 | PA6 [85] + teilar. PA[10] + PA-Ab [5] | 5 | 10,4 | |
| | | | | | |
| 3 | 1 | PA6 [80] + EMAA [15] + PA-Ab [5] | 3 | 6,4 | 47 |
| | 2 | PA6 [50] + PA6/66 [50] | 11 | 23,4 | |
| | 3 | PA6 [90] + PA6/66 [10] | 11 | 23,4 | |
| Ausführungsform C | 4 | HV [100] | 3 | 6,4 | |
| | 5 | PE [100] | 11 | 23,4 | |
| | 6 | HV [100] | 3 | 6,4 | |
| | 7 | PA6 [85] + teilar. PA[10] + PA-Ab [5] | 5 | 10,6 | |

**Tabelle 2: Schichtaufbau zu den Vergleichsbeispielen V1 bis V3**

| Beispiel Nr. | Schicht (1 = außen) | Zusammensetzung [Gew.-%] | Schichtdicke | | |
|---|---|---|---|---|---|
| | | | einzeln | | gesamt |
| | | | µm | % | µm |
| V1 | 1 | PA6 [95] + PA-Ab [5] | 3 | 6,5 | 46 |
| | 2 | PA6 [100] | 7 | 15,2 | |
| | 3 | PA6 [90] + PA6/66 [10] | 15 | 32,6 | |
| | 4 | PE [50] + HV [50] | 14 | 30,4 | |
| | 5 | PA6 [85] + teilar. PA[10] + PA-Ab [5] | 7 | 15,3 | |
| | | | | | |
| V2 | 1 | PA6/66 [95] + PA-Ab [5] | 3 | 6,5 | 47 |
| | 2 | PA6 [100] | 8 | 17 | |
| | 3 | PA6 [90] + PA6/66 [10] | 14 | 29,8 | |
| | 4 | PE [50] + HV [50] | 15 | 31,9 | |
| | 5 | PA6 [85] + teilar. PA[10] + PA-Ab [5] | 7 | 14,9 | |
| | | | | | |
| V3 | 1 | PA6 [80] + E MAA [15] + PA-Ab [5] | 3 | 6 | 50 |
| | 2 | PA6 [100] | 7 | 14 | |
| | 3 | PA6 [90] + PA6/66 [10] | 14 | 28 | |
| | 4 | HV [100] | 3,5 | 7 | |
| | 5 | PE[100] | 13 | 26 | |
| | 6 | HV [100] | 3,5 | 7 | |
| | 7 | PA6 [85] + teilar. PA[10] + PA-Ab [5] | 6 | 12 | |

Die an den Proben aus den Beispielen ermittelten Prüfwerte sind in der nachfolgenden Tabelle 3 aufgeführt.

Ein Vergleich der Werte für die 5 % Dehnspannung mit denen für die Reißspannung zeigt, daß keine signifikanten Festigkeitsunterschiede zwischen den erfindungsgemäßen Hüllen und den am Stand der Technik angelehnten Hülle bestehen. Die Hülle gemäß V2 (mit Schichten überwiegend bzw. vollständig aus PA 6/66) zeigt sich jedoch deutlich unterlegen.

Vergleicht man paarweise die Werte der Reißdehnung ohne bzw. mit vorheriger Wechselknickbeanspruchung, so erkennt man keinen signifikanten Abfall bei den erfindungsgemäßen Hüllen. Die Hüllen gemäß V1 und V3 zeigen hingegen einen starken Rückgang bei der Reißdehnung nach Vorbeanspruchung. Die erfindungsgemäßen Hüllen sind demnach wesentlich widerstandsfähiger gegenüber Knickbeanspruchung bzw. sie besitzen überlegene Zähigkeit.

Bei der Benotung für die Verklebungsneigung zeigt sich eine deutliche Unterlegenheit der Hülle gemäß V2 (bei der die Außenschicht zu 95 % aus PA 6/66 besteht, entsprechend dem Stand der Technik) gegenüber den erfindungsgemäßen Hüllen.

Vergleicht man die Werte für die prozentuale Druckfarbenablösung, so erkennt man deutlich den Vorsprung der Hüllen mit einer Außenschicht wie in der Erfindung (Beispiele 1 bis 3 und V3) gegenüber Hüllen mit einer Außenschicht, wie sie im Stand der Technik gelehrt wird (Beispiele V1 und V2). Bei den Hüllen mit EMAA-Copolymer in der Außenschicht scheint eine chemische Verankerung der Druckfarbe über die Säuregruppen vorzuliegen.

**Tabelle 3: Prüfwerte der Hüllen gemäß den Beispielen und den Vergleiclisbeispielen**

| Beispiele Nr. | σ₅ | | σ_{R} | | ε_{R0} | ε_{RV} | Verklebungsneigung | Druckfarbenablösung |
|---|---|---|---|---|---|---|---|---|
| | [N/mm²] | | [N/mm²] | | [%] | [%] | | |
| | längs | quer | längs | quer | längs | längs | (Noten 1 bis 5) | [Flächen-%] |
| 1 | 15,1 | 13,8 | 103 | 98 | 108 | 103 | 1 | 3 |
| 2 | 14,6 | 13,4 | 98 | 96 | 117 | 113 | 2 | 2 |
| 3 | 14,1 | 13,3 | 96 | 95 | 119 | 117 | 1 | 3 |
| V1 | 16,2 | 14,7 | 111 | 102 | 95 | 76 | 1 | 50 |
| V2 | 13,8 | 12,2 | 88 | 82 | 123 | 118 | 4 | 45 |
| V3 | 15,9 | 14,6 | 109 | 100 | 96 | 74 | 1 | 3 |

## Patentansprüche

1. Biaxial verstreckte Schlauchfolie mit mehreren Schichten auf Basis von aliphatischem Polyamid, **dadurch gekennzeichnet, daß** sie mindestens 5 Schichten aufweist, von dienen die äußere Schicht und die beiden darauf folgenden Schichten zu 50 Gew.-% oder mehr aus mindestens einem aliphatischen (Co-)Polyamid bestehen, dabei jedoch unterschiedlich zusammengesetzt sind, wobei die Schicht, die ihre Außenseite bildet, mindestens 60 Gew.-% Polyamid 6 und mindestens 8 Gew.-% eines thermoplastischen Copolymers mit Carboxylgruppen enthält, und die 2. Schicht von außen eine Mischung aus mindestens 25 Gew.-% Polyamid 6 und mindestens 25 Gew.-% Polyamid 6/66 umfaßt und die 3. Schichtvon außen zu 50 Gew.-% oder mehr aus Polyamid 6 besteht.

2. Schlauchfolie gemäß Anspruch 1, **dadurch gekennzeichnet, daß** sie 5-, 6-oder 7-schichtig ist.

3. Schlauchfolie gemäß Anspruch 1 oder 2, **dadurch gekennzeichnet, daß** das thermoplastische Copolymer mit Carboxylgruppen ein Ethylen/(Meth)acrylsäure-Copolymer ist

4. Schlauchfolie gemäß Anspruch 3, **dadurch gekennzeichnet, daß** die Schicht, die die Außenseite bildet, 3 bis 15 %, bevorzugt 5 bis 10 %, zu ihrer Gesamtdicke beiträgt.

5. Schlauchfolie gemäß einem oder mehreren der Ansprüche 1 bis 4, **dadurch gekennzeichnet, daß** die 2. Schichtvon außen eine Mischung aus 40 bis 70 Gew.-% Polyamid 6 und 30 bis 60 Gew.-% Polyamid 6/66 umfaßt.

6. Schlauchfolie gemäß einem oder mehreren der Ansprüche 1 bis 5, **dadurch gekennzeichnet, daß** die 2. Schicht von außen 10 bis 30 %, bevorzugt 12 bis 25 %, zu ihrer Gesamtdicke beiträgt.

7. Schlauchfolie gemäß einem oder mehreren der Ansprüche 1 bis 6, **dadurch gekennzeichnet, daß** die 3. Schicht von außen 20 bis 40 %, bevorzugt 25 bis 35 %, zu ihrer Gesamtdicke beiträgt

8. Schlauchfolie gemäß einem oder mehreren der Ansprüche 1 bis 7, **dadurch gekennzeichnet, daß** die 4. Schicht von außen ein (Co-)Polymer umfaßt, das eine Haftung an eine angrenzende Polyamidschicht herzustellen vermag.

9. Schlauchfolie gemäß einem oder mehreren der Ansprüche 1 bis 8, **dadurch gekennzeichnet, daß** die Schicht, die ihre Innenseite bildet, eine Schicht auf Basis von mindestens einem aliphatischem (Co-)Polyamid ist.

10. Schlauchfolie gemäß Anspruch 9, **dadurch gekennzeichnet, daß** die Schicht, die die Innenseite bildet, 50 Gew.-% oder mehr an Polyamid 6, gegebenenfalls 2 bis 20 Gew.-% eines teilaromatischen (Co-)Polyamids und gegebenenfalls mindestens ein Antiblockpigment umfaßt.

11. Schlauchfolie gemäß einem oder mehreren der Ansprüche 1 bis 10, **dadurch gekennzeichnet, daß** sie eine Gesamt-Wanddicke von 20 bis 65 µm, bevorzugt von 25 bis 50 µm, aufweist.

12. Schlauchfolie gemäß einem oder mehreren der Ansprüche 1 bis 11, **dadurch gekennzeichnet, daß** sie einen Schrumpf von 3 bis 20 % in Längs-und Querrichtung aufweist, gemessen nach 15 min Lagerung in 80 °C warmem Wasser.

13. Verfahren zur Herstellung einer Schlauchfolie gemäß einem oder mehreren der Ansprüche 1 bis 12, **dadurch gekennzeichnet, daß** es die folgenden Schritte umfaßt:
- Bereitstellen der für die einzeinen Schichten vorgesehenen Kunststoffe oder Kunststoff-Abmischungen,
- Aufschmelzen der Kunststoffe oder Kunststoff-Abmischungen in separaten Extrudern zu thermoplastischen Schmelzen,
- Zusammenführen der thermoplastischen Schmelzen in einer beheizten Coextrusions-Ringdüse,
- Extrudieren eines schlauchförmigen Schmelzefilms,
- Verfestigen des Schmelzefilms zu einem weitgehend amorphen Vorschlauch durch schnelles Abkühlen,
- Erwärmen des Vorschlauchs auf eine zum Verstrecken geeignete Temperatur,
- biaxiales Verstrecken des erwärmten Vorschlauchs durch den Druck eines von innen wirkenden Gases, bevorzugt Luft, und
- gegebenenfalls Thermoflxieren des verstreckten Schlauchs.

14. Verwendung der Schlauchfolie gemäß einem oder mehreren der Ansprüche 1 bis 12 als Nahrungsmittelhülle, bevorzugt als künstliche Wursthülle.

## Claims

1. A biaxially drawn tubular film having a plurality of aliphatic polyamide-based layers, which has at least 5 layers, of which the outer layer and the two layers following thereon comprise 50 % by weight or more of at least one aliphatic (co)polyamide, but are differently composed, where the layer which forms its outside contains at least 60 % by weight of nylon 6 and at least 8 % by weight of a thermoplastic copolymer containing carboxyl groups, and the 2nd layer from the outside comprises a mixture of at least 25 % by weight of nylon 6 and at least 25 % by weight of nylon 6/66 and the 3rd layer from the outside comprises 50 % by weight or more of nylon 6.

2. The tubular film as claimed in claim 1, which is 5-, 6- or 7-layered.

3. The tubular film as claimed in claim 1 or 2, wherein the thermoplastic copolymer containing carboxyl groups is an ethylene/(meth)acrylic acid copolymer.

4. The tubular film as claimed in claim 3, wherein the layer which forms the outside contributes 3 to 15 %, preferably 5 to 10 %, of its total thickness.

5. The tubular film as claimed in one or more of claims 1 to 4, wherein the 2^{nd} layer from the outside comprises a mixture of 40 to 70 % by weight of nylon 6 and 30 to 60 % by weight of nylon 6/66.

6. The tubular film as claimed in one or more of claims 1 to 5, wherein the 2nd layer from the outside contributes 10 to 30 %, preferably 12 to 25 %, of its total thickness.

7. The tubular film as claimed in one or more of claims 1 to 6, wherein the 3rd layer from the outside contributes 20 to 40 %, preferably 25 to 35 %, of its total thickness.

8. The tubular film as claimed in one or more of claims 1 to 7, wherein the 4th layer from the outside comprises a (co)polymer which is able to produce adhesion to an adjoining polyamide layer.

9. The tubular film as claimed in one or more of claims 1 to 8, wherein the layer which forms its inside is a layer based on at least one aliphatic (co)polyamide.

10. The tubular film as claimed in claim 9, wherein the layer which forms the inside comprises 50 % by weight or more of nylon 6, optionally 2 to 20 % by weight of a partially aromatic (co)polyamide, and optionally at least one antiblocking pigment.

11. The tubular film as claimed in one or more of claims 1 to 10, which has a total wall thickness of 20 to 65 µm, preferably of 25 to 50 µm.

12. The tubular film as claimed in one or more of claims 1 to 11, which has a shrinkage of 3 to 20 % in the longitudinal and transverse direction, measured after storage for 15 min in hot water at 80 °C.

13. A process for producing a tubular film as claimed in one or more of claims 1 to 12, which comprises the following steps:
- supplying the plastics or plastic blends provided for the individual layers,
- melting the plastics or plastic blends in separate extruders to give thermoplastic melts,
- combining the thermoplastic melts in a heated coextrusion ring die,
- extruding a tubular melt film,
- solidifying the melt film to form a substantially amorphous pretube by rapid cooling,
- heating the pretube to a temperature suitable for drawing,
- biaxially drawing the heated pretube via the pressure of an internally-acting gas, preferably air, and
- optionally heat setting the drawn tube.

14. The use of the tubular film as claimed in one or more of claims 1 to 12 as food casing, preferably as artificial sausage casing.

## Revendications

1. Feuille en gaine étirée biaxialement, comprenant plusieurs couches à base de polyamide aliphatique, **caractérisée en ce qu'**elle présente au moins 5 couches, parmi lesquelles la couche externe et les deux couches qui suivent sont constituées à hauteur de 50 % en poids ou plus d'au moins un (co-)polyamide aliphatique, mais dont la composition est, en l'occurrence, différente, la couche formant la face externe contenant au moins 60 % en poids de polyamide 6 et au moins 8 % en poids d'un copolymère thermoplastique présentant des groupements carboxyle, et la 2^{ème} couche depuis l'extérieur comprenant un mélange d'au moins 25 % en poids de polyamide 6 et d'au moins 25 % en poids de polyamide 6/66 et la 3^{ème} couche depuis l'extérieur étant constituée à hauteur de 50 % en poids ou plus de polyamide 6.

2. Feuille en gaine selon la revendication 1, **caractérisée en ce qu'**elle est constituée de 5, 6 ou 7 couches.

3. Feuille en gaine selon la revendication 1 ou 2, **caractérisée en ce que** le copolymère thermoplastique présentant des groupements carboxyle est un copolymère d'éthylène/acide (méth)acrylique.

4. Feuille en gaine selon la revendication 3, **caractérisée en ce que** la couche formant la face externe contribue à hauteur de 3 à 15 %, de préférence, de 5 à 10 %, à son épaisseur totale.

5. Feuille en gaine selon l'une quelconque ou plusieurs des revendications 1 à 4, **caractérisée en ce que** la 2^{ème} couche depuis l'extérieur comprend un mélange constitué de 40 à 70 % en poids de polyamide 6 et de 30 à 60 % en poids de polyamide 6/66.

6. Feuille en gaine selon l'une quelconque ou plusieurs de revendications 1 à 5, **caractérisée en ce que** la 2^{ème} couche depuis l'extérieur contribue à hauteur de 10 à 30 %, de préférence, de 12 à 25 %, à son épaisseur totale.

7. Feuille en gaine selon l'une quelconque ou plusieurs de revendications 1 à 6, **caractérisée en ce que** la 3^{ème} couche depuis l'extérieur contribue à hauteur de 20 à 40 %, de préférence de 25 à 36 %, à son épaisseur totale.

8. Feuille en gaine selon l'une quelconque ou plusieurs des revendications 1 à 7, **caractérisée en ce que** la 4^{ème} couche depuis l'extérieur comprend un (co-)polymère qui est en mesure de produire une adhérence sur une couche de polyamide attenante.

9. Feuille en gaine selon l'une quelconque ou plusieurs des revendications 1 à 8, **caractérisée en ce que** la couche formant sa face interne, est une couche à base d'au moins un (co-)polyamide aliphatique.

10. Feuille en gaine selon la revendication 9, **caractérisée en ce** la couche formant la face interne comprend 50 % en poids ou plus de polyamide 6, éventuellement 2 à 20 % en poids d'un (co-)polyamide partiellement aromatique et, éventuellement, au moins un pigment anti-adhérence.

11. Feuille en gaine selon l'une quelconque ou plusieurs des revendications 1 à 10, **caractérisée en ce qu'**elle présente une épaisseur de paroi totale de 20 à 65 µm, de préférence, de 25 à 50 µm.

12. Feuille en gaine selon l'une quelconque ou plusieurs des revendications 1 à 11, **caractérisée en ce qu'**elle présente un retrait de 3 à 20 % dans les directions longitudinale et transversale, mesuré au bout de 15 min de stockage dans de l'eau chaude à 80 °C.

13. Procédé de fabrication d'une feuille en gaine selon l'une quelconque ou plusieurs des revendications 1 à 12, **caractérisé en ce qu'**il comprend les étapes suivantes consistant à :
- préparer les matériaux synthétiques ou les mélanges de matériaux synthétiques prévus pour les couches individuelles,
- fondre les matériaux synthétiques ou les mélanges de matériaux synthétiques dans des extrudeuses séparées sous la forme de masses fondues thermoplastiques,
- réunir les masses fondues thermoplastiques dans une tuyère annulaire de coextrusion chauffée,
- extruder un film fondu en forme de boyau,
- durcir le film fondu pour donner une ébauche de boyau par un refroidissement rapide,
- chauffer l'ébauche de boyau à une température appropriée pour l'étirage,
- étirer biaxialement l'ébauche de boyau chauffée par la pression d'un gaz agissant de l'intérieur, de préférence de l'air, et
- éventuellement procéder à une thermofixation du boyau étiré.

14. Utilisation de la feuille en gaine selon l'une quelconque ou plusieurs des revendications 1 à 12, comme enveloppe pour produits alimentaires, de préférence, comme enveloppe de saucisse synthétique.
